**Europäisches Patentamt**

**European Patent Office**

**Office européen des brevets**

(19)

(11) Veröffentlichungsnummer: **0 097 784**

**B1**

(12) **EUROPÄISCHE PATENTSCHRIFT**

(45) Veröffentlichungstag der Patentschrift:
23.07.86

(21) Anmeldenummer: 83103836.9

(22) Anmeldetag: 20.04.83

(51) Int. Cl.⁴: **C 08 J 3/02,** C 08 G 59/58, C 04 B 24/28

(54) Epoxidharz-Diammoniumsalz-Emulsion und Verfahren zu ihrer Herstellung.

(30) Priorität: 16.06.82 DE 3222531

(43) Veröffentlichungstag der Anmeldung:
11.01.84 Patentblatt 84/2

(45) Bekanntmachung des Hinweises auf die Patenterteilung:
23.07.86 Patentblatt 86/30

(84) Benannte Vertragsstaaten:
AT BE CH DE FR GB IT LI NL SE

(56) Entgegenhaltungen:
EP-A-0 005 617
GB-A-1 244 424
US-A-3 129 133
US-A-3 926 886

CHEMICAL ABSTRACTS, Band 80, 1974, Seite 44,
Nr. 121894e, Columbus, Ohio, USA
CHEMICAL ABSTRACTS, Band 85, 1976, Seite 56,
Nr. 125149s, Columbus, Ohio, USA

(73) Patentinhaber: **HÜLS AKTIENGESELLSCHAFT,
Patentabteilung / PB 15 - Postfach 13 20, D-4370
Marl 1 (DE)**

(72) Erfinder: **Weiss, Jörn- Volker, Dr., Im Hadkamp 1,
D-4358 Haltern 3 (DE)**
Erfinder: **Riemer, Heinz, Dr., Fritz- Reuter- Strasse
15, D-4250 Bottrop 2 (DE)**
Erfinder: **Mutzberg, Friedhelm, Gleiwitzer- Strasse
55, D-4330 Mülheim (DE)**

## Beschreibung

Epoxidharze sind aufgrund ihrer Eigenschaften ein im Bausektor vielseitig verwendbarer Werkstoff (vgl. z. B. H. Saechtling, "Bauen mit Kunststoffen", Carl-Hanser-Verlag, München, 1973). Neben den reinen Epoxidharz-Mörteln, die z. B. für Beschichtungen und Haftbrücken eingesetzt werden, bieten sich auch für Epoxidharz-Zementmörtel wegen ihrer guten Haftfestigkeit, des guten Schwindverhaltens und ihres Wasserrückhaltevermögens im Bauwesen interessante Anwendungsmöglichkeiten.

Wesentliche Voraussetzung für die Verarbeitung von Epoxidharzen ist, daß Harz und Härter unter den am Bau herrschenden Witterungsbedingungen in angemessener Zeit weitgehend vollständig miteinander reagieren.

Das in der DE-A-28 40 874 beschriebene Bindemittelgemisch, das aus einem hydraulischen Binder, einem Epoxidharz, dem Adduct aus einem Polyamin und einer Epoxidverbindung, Wasser und gegebenenfalls Reaktivverdünnern, Pigmenten und weiteren Hilfsstoffen besteht, ist besonders für die Sanierung von schadhaften Stahlbetonteilen geeignet, da die Anwendung eines Korrosionsschutzprimärs mit diesem Gemisch entbehrlich wird.

Der Nachteil dieses 2-Komponenten-Systems besteht darin, daß es wegen seiner begrenzten Haltbarkeit auf dem Bau hergestellt und innerhalb einer relativ kurzen Zeitspanne (ca. eine halbe Stunde) verarbeitet werden muß. Es ist bekannt, daß das Verhältnis des Härters zum Epoxidharz von entscheidender Bedeutung ist. Das zitierte Verfahren, bei dem es auf eine schnelle und sehr sorgfältige Durchmischung ankommt, wenn nicht Qualitätseinbußen hingenommen werden sollen, weist daher in der Praxis Nachteile auf.

Günstiger ist es, entsprechend der US-A-3 926 886, von einer Epoxidharz-Diammoniumacetat- oder -formiat-Emulsion auszugehen, die aus einem flüssigen Epoxidharz, Wasser und einem substituierten Diammoniumsalz besteht, und in Gegenwart von Zement eine Härtung durchzuführen.

Das Diammoniumsalz soll bei diesem Verfahren eine doppelte Funktion einnehmen: einmal soll es nach Reaktion mit dem alkalisch wirkenden Zement das zugrundeliegende Diamin freisetzen, das dann das Epoxidharz aushärtet, zum anderen soll es die Funktion eines Emulgators wahrnehmen. Die Stabilität der auf diese Weise erhaltenen Emulsion ist jedoch nicht gewährleistet, insbesondere dann nicht, wenn unter extremen Witterungsbedingungen gearbeitet werden muß. Daher wird bereits in der US-PS 3 926 886 vorgeschlagen, der Mischung bis zu 15% eines handelsüblichen Emulgators zuzusetzen. Indessen bleibt auch nach solchen Zusätzen die Stabilität der Emulsion eine kritische Größe.

Unbefriedigend ist ferner, daß als Aminkomponente nur bestimmte ethergruppenhaltige Diamine der Formel

$R_1$ -O-$R_2$ -NH-$R_3$ -$NH_2$

geeignet sind, wobei $R_1$ ein Alkylrest mit mindestens 8 C-Atomen und $R_2$ und $R_3$ niedere Alkylenreste mit 2 bis 4 C-Atomen darstellen. Es wäre demgegenüber wünschenswert, leichter zugängliche Diamine zur Herstellung von Emulsionen einzusetzen. Die überwiegende Zahl derartiger Diamine ist aber - im Gegensatz zu den Diaminen der US-PS 3 926 886 - in jedem Verhältnis mit Wasser mischbar. Ihre Formiate und Acetate sind mit den üblichen Emulgatoren, wie z. B. Fettalkoholoxethylaten, Alkylsulfonaten oder Phosphorsäurehalbestern, nicht emulgierbar. Andererseits sind nur homogene stabile Emulsionen in der Lage, in gleichmäßiger Qualität eine Kaltaushärtung der eingesetzten flüssigen Epoxidverbindungen zu gewährleisten.

Es bestand daher die Aufgabe dieser Erfindung darin, Formulierungen zu entwickeln, die es erlauben, mit zur Härtung von Epoxidharzen geeigneten Diaminen, die selbst keine Emulgatorwirkung haben, stabile wäßrige Epoxidharz-Diammoniumsalz-Emulsionen herzustellen.

Diese Aufgabe wurde mit Emulsionen gelöst, die folgende Komponenten enthalten:

1. ein flüssiges Epoxidharz,
2. einen primären aliphatischen Alkohol mit 8 bis 14 C-Atomen und/ oder dessen Adduct mit bis zu 10 Ethylenoxidgruppen (Emulgator),
3. das Reaktionsprodukt, das man durch vollständige Neutralisation eines Diamins der Formeln I oder II

I $H_2N$-$CH_2$ -R-$NH_2$
II $H_2N$-R-$CH_2$ -R-$NH_2$

mit Oxalsäure erhält, wobei R ein substituierter Alkylen- oder Cycloalkylenrest mit 8 bis 9 C-Atomen oder ein Aralkylenrest mit 7 bis 9 C-Atomen ist (latenter Härter), und

4. Wasser.

Es sei ausdrücklich darauf hingewiesen, daß unter Emulsionen im Rahmen dieser Anmeldung nicht nur die 2-Phasen-Systeme gemeint sein sollen, die durch Dispersion einer flüssigen Phase in einer anderen flüssigen Phase entstanden sind, sondern auch jene Systeme, in denen eine feste Phase in einer flüssigen Phase dispergiert ist sowie alle Übergänge dieser beiden Systeme.

Gegenstand der Erfindung ist ferner das Verfahren zur Herstellung dieser Emulsionen sowie deren Verwendung.

Die Aminkomponente soll also nicht, wie dies beispielsweise in der EP-A1-00 43 463 beschrieben ist, mit Epoxidharzen bei erhöhter Temperatur zu Addukten reagieren, die durch Zusätze von Säure wasserlöslich und dispergierbar gemacht werden, vielmehr geht es hier darum, eine Emulsion aus einem Diammoniumsalz und einem Epoxidharz herzustellen, bei der erst nach Zusatz eines alkalisch reagierenden Stofies der Aushartungsprozeß eingeleitet wird.

Die Emulsionen können erfindungsgemäß in Epoxidharz-Mörteln wie auch in Epoxidharz-Zementmörteln zum Einsatz kommen. Sie eigner sich ferner zur Versiegelung von Frischbetonflächen, um das Wasserrückhaltevermögen des Betons zu verbessern.

Die Diamine, die Bestandteil des Härters sind, weisen die Formeln I oder II

I $H_2N - CH_2 - R - NH_2$
II $H_2N - R - CH_2 - R - NH_2$

auf, wobei R ein substituierter Alkylen- oder Cycloalkylenrest mit 6 bis 9 C-Atomen oder ein Aralkylenrest mit 7 bis 9 C-Atomen ist. Insbesondere eignen sich Tolylenreste sowie Alkylen- und Cyclohexylenreste, die durch ein bis drei Methylgruppen substituiert sind. Bevorzugt setzt man 2, 2, 4-Trimethylhexamethylendiamin (TMD), Xylylendiamine oder Diamine ein, die ein oder zwei Cyclohexanringe enthalten, wie z. B. 3-Aminomethyl-3, 5, 5-trimethylcyclohexylamin (Isophorondiamin, IPD) oder 4, 4' -Diamino-3, 3' -dimethyldicyclohexylmethan.

Die Oxalsäure kann bis zu 25 Gewichtsprozent durch Essigsäure ersetzt werden. Unabhängig hiervon kann die Oxalsäure auch durch aliphatische Dicarbonsäuren, die 3 bis 6 C-Atome aufweisen, oder Isomere der Phthalsäure ersetzt werden, jedoch muß die Säuremischung insgesamt mindestens 40 Gewichtsprozent Oxalsäure enthalten. Es können sowohl aliphatische Dicarbonsäuren, wie z. B. Malonsäure oder Adipinsäure, als auch ungesättigte, wie z. B. Fumarsäure, oder hydroxylgruppenhaltige, wie z. B. Weinsäure, eingesetzt werden.

Als Emulgatoren werden endständige Alkohole mit 8 bis 14 C-Atomen sowie deren Gemische eingesetzt. Geeignet sind auch die Addukte dieser Alkohole mit bis zu 10 Ethylenoxidgruppen. Bevorzugt wird Laurylalkohol. Die Stabilität der Emulsionen kann gegebenenfalls durch Zusätze von Laurinsäure verbessert werden. Bezogen auf die eingesetzte Menge an Epoxidharz haben sich Emulgatorzusätze von 10 bis 25 % bewährt.

Die zur Kalthärtung geeigneten flüssigen Epoxidverbindungen sind vorwiegend Umsetzungsprodukte von Epichlorhydrin oder Glycidol mit 2, 2-Bis(4-hydroxyphenyl) alkanen. Die präzise chemische Struktur der im Handel erhältlichen Epoxidharze, wie z. B. Epoxidharz EUREPOX® der Firma Schering, Berlin oder Epoxidharz RÜTAPOX® VE 2913 der Firma Bakelite GmbH, Duisburg ist unbekannt.

Die Herstellung der Emulsionen erfolgt in der Weise, daß man zunächst eine wäßrige Lösung des Diamins vorlegt. Die Menge des Diamins richtet sich nach den Angaben des Epoxidharzherstellers, z. B. dem Epoxidwert des eingesetzten Epoxidharzes oder dem angegebenen Mischungsverhältnis von Harz und Härter. Die für eine Emulsion günstigste Wassermenge ist im wesentlichen von der Art des Diamins abhängig. Bei Diaminen mit einer relativ kleinen Anzahl von Kohlenstoffatomen, z. B. 7, ist weniger Wasser als bei Diaminen mit einer größeren Anzahl von Kohlenstoffatomen, z. B. 12, erforderlich. Durch Variation der Wassermenge zwischen 30 und 130%, bezogen auf die eingesetzte Menge Epoxidharz, kann die optimale Menge durch Vergleichsversuche leicht ermittelt werden.

Zur wäßrigen Lösung des Diamins wird anschließend soviel Säure hinzugefügt, wie zur vollständigen Neutralisation erforderlich ist. Bei starker Reaktionswärme empfiehlt sich die Kühlung des Reaktionsgemisches. Das Einbringen des Emulgators erfolgt unter Rühren bei Raumtemperatur. In das so hergestellte Gemisch wird dann ebenfalls bei Raumtemperatur unter schnellem Rühren das Epoxidharz langsam hinzugegeben. Nach beendeter Zugabe wird noch 0,5 bis 1,0 Stunden nachgerührt. Es werden so Emulsionen erhalten, die bei Raumtemperatur über Monate stabil sind. Beim Auftreten einer Phasentrennung lassen sich die Mischungen durch erneutes Rühren schnell wieder homogenisieren.

a) Herstellung der Emulsionen
(Die Mengenangaben der Oxalsäure beziehen sich stets auf das Dihydrat.)

## Beispiel 1

In einem Standkolben mit Magnetrührer wurden 105 Gewichtsteile Wasser mit 28, 2 Gewichtsteilen Isophorondiamin (IPD) vorgelegt. Zu dieser Lösung wurden 10,2 Gewichtsteile Oxalsäure, 4, 5 Gewichtsteile Essigsäure und 7,5 Gewichtsteile Phthalsäure hinzugefügt. Nach dem Abkühlen der Reaktionsmischung auf Raumtemperatur wurden unter Rühren 6,0 Gewichtsteile Laurylalkohol und portionsweise 17,4 Gewichtsteile Laurinsäure in die Mischung gegeben. Anschließend wurden unter schnellem Rühren (ca. 1 000 U/min) 120 Gewichtsteile Epoxidharz RÜTAPOX® VE 2913 langsam zu der Mischung gegeben.

Anschließend wurde noch eine Stunde mit gleicher Rührerdrehzahl nachgerührt. Man erhielt eine niedrigviskose Emulsion, die nach zwei Monaten noch keine Veränderungen zeigte.

## Vergleichsbeispiel A

Es wurde wie in Beispiel 1 verfahren, jedoch erfolgte die Neutralisation des Diamins diesmal ausschließlich mit 21, 6 Gewichtsteilen Essigsäure. Die erhaltene Emulsion zersetzte sich bereits nach wenigen Minuten.

## Vergleichsbeispiel B

Es wurde wie in Beispiel 1 verfahren, jedoch erfolgte die Neutralisation des Diamins diesmal ausschließlich mit 16,2 Gewichtsteilen Ameisensäure. Die erhaltene Emulsion zersetzte sich bereits nach wenigen Minuten.

**Beispiel 2**

Aus 90 Gewichtsteilen Wasser, 28,2 Gewichtsteilen IPD, 19,8 Gewichtsteilen Oxalsäure, 3 Gewichtsteilen Weinsäure, 12 Gewichtsteilen Laurylalkohol und 120 Gewichtsteilen Epoxidharz RÜTAPOX® VE 2913 wurde, wie in Beispiel 1 beschrieben, eine niedrigviskose, stabile Emulsion hergestellt. Die nach dreimonatiger Lagerung bei Raumtemperatur aufgetretene leichte Entmischung konnte durch Aufrühren wieder beseitigt werden.

**Beispiel 3**

Aus 15 Gewichtsteilen Wasser, 4,4 Gewichtsteilen 2, 2, 4-Trimethylhexamethylendiamin (TMD), 3,5 Gewichtsteilen Oxalsäure, 2, 0 Gewichtsteilen Laurylalkohol und 20 Gewichtsteilen Epoxidharz RÜTAPOX® VE 2913 wurden, wie in Beispiel 1 beschrieben, eine stabile niedrigviskose Emulsion hergestellt.

**Beispiel 4**

Aus 20 Gewichtsteilen Wasser, 6,6 Gewichtsteilen 4,4' -Diamino-3,3' -dimethyldicyclohexylmethan, 3,8 Gewichtsteilen Oxalsäure, 2,0 Gewichtsteilen Laurylalkohol und 20 Gewichtsteilen Epoxidharz RÜTAPOX® VE 2913 wurde, wie in Beispiel 1 beschrieben, eine stabile mittelviskose Emulsion hergestellt.

**Beispiel 5**

Aus 10 Gewichtsteilen Wasser, 3,8 Gewichtsteilen Xylylendiamin (Gemisch der Isomeren), 3,6 Gewichtsteilen Oxalsäure, 2,0 Gewichtsteilen Laurylalkohol, 2,0 Gewichtsteilen Laurinsäure und 20 Gewichtsteilen Epoxidharz RUTAPOX® VE 2913 wurde, wie in Beispiel 1 beschrieben, eine stabile Emulsion hergestellt.

**Beispiel 6**

Aus 40 Gewichtsteilen Wasser, 9,4 Gewichtsteilen IPD, 3,2 Gewichtsteilen Fumarsäure, 3,5 Gewichtsteilen Oxalsäure, 4,0 Gewichtsteilen Laurylalkohol, 4,0 Gewichtsteilen Laurinsäure und 40 Gewichtsteilen Epoxidharz RÜTAPOX® VE 2913 wurde, wie in Beispiel 1 beschrieben, eine niedrigviskose Emulsion hergestellt.

**Beispiel 7**

Aus 35 Gewichtsteilen Wasser, 9,4 Gewichtsteilen IPD, 3,5 Gewichtsteilen Oxalsäure, 4,1 Gewichtsteilen Adipinsäure, 2,0 Gewichtsteilen Laurylalkohol, 2,0 Gewichtsteilen Laurinsäure und 40 Gewichtsteilen Epoxidharz RÜTAPOX® VE 2913 wurde, wie in Beispiel 1 beschrieben, eine niedrigviskose Emulsion hergestellt.

**Beispiel 8**

5 Aus 35 Gewichtsteilen Wasser, 9,4 Gewichtsteilen IPD, 3,5 Gewichtsteilen Oxalsäure, 2,9 Gewichtsteilen Malonsäure, 2,0 Gewichtsteilen Laurylalkohol, 2,0 Gewichtsteilen Laurinsäure und 40 Gewichtsteilen Epoxidharz RÜTAPOX® VE 2913 wurde, wie in Beispiel 1 beschrieben, eine niedrigviskose Emulsion hergestellt.

**Beiseiel 9**

Aus 35 Gewichtsteilen Wasser, 9,4 Gewichtsteilen IPD, 1,5 Gewichtsteilen Essigsäure, 2,5 Gewichtsteilen Phthalsäure, 3,5 Gewichtsteilen Oxalsäure, 2,0 Gewichtsteilen Lauryltriglykol, 2,0 Gewichtsteilen Laurinsäure und 40 Gewichtsteilen-Epoxidharz RÜTAPOX® VE 2913 wurde, wie in Beispiel 1 beschrieben, eine niedrigviskose Emulsion hergestellt.

**Beispiel 10**

Aus 15 Gewichtsteilen Wasser, 4,7 Gewichtsteilen IPD, 0,5 Gewichtsteilen Weinsäure, 3,3 Gewichtsteilen Oxalsäure, 2,0 Gewichtsteilen Laurylalkohol, 0,5 Gewichtsteilen eines mit 9 Mol Ethylenoxid umgesetzten Gemisches aus Dodecyl- und Tetradecyl-Alkohol (ALFOL® 12/14) und 20 Gewichtsteilen Epoxidharz RÜTAPOX® VE 2913 wurde, wie in Beispiel 1 beschrieben, eine niedrigviskose Emulsion hergestellt.

**Beispiel 11**

Aus 12 Gewichtsteilen Wasser, 4,7 Gewichtsteilen IPD, 0,5 Gewichtsteilen Weinsäure, 3,3 Gewichtsteilen Oxalsäure, 2,0 Gewichtsteilen Lauryltriglykol und 20 Gewichtsteilen Epoxidharz RÜTAPOX® VE 2913 wurde, wie in Beispiel 1 beschrieben, eine mittelviskose Emulsion hergestellt.

**Beispiel 12**

Aus 10 Gewichtsteilen Wasser, 3,5 Gewichtsteilen Oxalsäure, 4,7 Gewichtsteilen Isophorondiamin, 1,5 Gewichtsteilen 2-Ethylhexanol und 20 Gewichtsteilen Epoxidharz RÜTAPOX® VE 2913 wurde, wie in Beispiel 1 beschrieben, eine stabile Emulsion hergestellt.

**b) Herstellung von Epoxidharz-Zementmörteln**

**Beispiel 13**

Zur Herstellung eines Epoxidharz-Zementmörtels wurden 100 Gewichtsteile Portlandzement 35F mit 45 Gewichtsteilen Wasser, 20 Gewichtsteilen der in Beispiel 1 beschriebenen Emulsion und 485 Gewichtsteilen Füllstoffe (60 Gewichtsteile EFA-Füller, 170 Gewichtsteile Sand HSE 2/3 mm, 170 Gewichtsteile Sand 0/1 mm, 85 Gewichtsteile Sand 1/3 mm) gemischt (in Anlehnung an DIN 1164). Die aus dieser Mischung gefertigten Prüfkörper wurden sieben Tage einer Feuchtlagerung und 21 Tage einer Lagerung bei Raumtemperatur unterworfen. Die nach DIN 1164 gemessenen Festigkeiten betrugen 53,5 N/mm$^2$ Druckfestigkeit und 8, 67 N/mm$^2$ Biegezugfestigkeit.

**Beispiel 14**

Der Mörtel wurde, wie in Beispiel 13 beschrieben, aus 100 Gewichtsteilen Portlandzement 35 F mit 60 Gewichtsteilen wasser, 23,4 Gewichtsteilen der Emulsion aus Beispiel 2 und 485 Gewichtsteilen Füllstoffen hergestellt. Die nach DIN 1164 gemessenen Festigkeiten der Prüfkörper betrugen 48, 8 N/mm$^2$ Druckfestigkeit und 8,88 N/mm$^2$ Biegezugfestigkeit.

**c) Herstellung von Epoxidharz-Mörteln**

**Beispiel 15**

40 Gewichtsteile Sand 0/1 mm wurden mit 15 Gewichtsteilen der in Beispiel 1 beschriebenen Emulsion gemischt. In die erhaltene Masse wurden 1,5 Gewichtsteile einer 50%igen Natronlauge eingearbeitet, wodurch ein homogener fließfähiger Mörtel entstand, der innerhalb von 24 Stunden bei einer Temperatur von 23 °C zu einer festen, klebfreien Masse aushärtete.

**Beispiel 16**

Wie in Beispiel 15 beschrieben, wurde aus 40 Gewichtsteilen Sand 0/1 mm, 15 Gewichtsteilen der in Beispiel 1 beschriebenen Emulsion und 0,65 Gewichtsteilen Calciumhydroxid ein Epoxidharz-Mörtel hergestellt.

**Beispiel 17**

Aus 40 Gewichtsteilen Sand 0/1 mm, 10 Gewichtsteilen der in Beispiel 2 beschriebenen Emulsion und 1 Gewichtsteil einer 50 %igen Natronlauge wurde, wie in Beispiel 15 beschrieben, ein Epoxidharz-Mörtel hergestellt.

**d) Versiegelung von Frischbetonoberflächen**

**Beispiel 18**

Die Oberfläche eines Betonprüfkörpers mit der Frischrohdichte von 2 380 kg/m$^3$ (hergestellt aus Portlandzement 35F, Wasserzementwert 0,55 und Zuschlagstoffen) wurde mit der in Beispiel 1 beschriebenen Emulsion gestrichen (169 g/m$^2$). Nach sechswöchiger Raumlagerung betrug die Rohdichte des Prüfkörpers 2 292 kg/m$^3$. Bei dem Vergleichsprüfkörper (Frischrohdichte ebenfalls 2 380 kg/m$^3$), dessen Oberfläche unbehandelt blieb, betrug die Rohdichte nach sechswöchiger Lagerung unter den gleichen Bedingungen 2 262 kg/m$^3$.

**Patentansprüche**

1. Epoxidharz-Diammoniumsalz-Emulsion auf Basis eines flüssigen Epoxidharzes, eines latenten Härters, eines Emulgators und Wasser, dadurch gekennzeichnet, daß
a) der Emulgator einen primären aliphatischen Alkohol mit 8 bis 14 C-Atomen und/oder dessen Addukt mit bis zu 10 Ethylenoxidgruppen darstellt und
b) der latente Härter das Reaktionsprodukt darstellt, das man durch vollständige Neutralisation eines Diamins der Formeln I oder II
I $H_2N - CH_2 - R - NH_2$
II $H_2N - R - CH_2 - R - NH_2$
mit Oxalsäure erhält, wobei R ein substituierter Alkylen- oder Cycloalkylenrest mit 6 bis 9 C-Atomen oder ein Aralkylenrest mit 7 bis 9 C-Atomen ist.
2. Epoxidharz-Diammoniumsalz-Emulsion gemäß Anspruch 1, dadurch gekennzeichnet, daß der Emulgator zusätzlich Laurinsäure enthält.

3. Epoxidharz-Diammoniumsalz-Emulsion gemäß den Ansprüchen 1 und 2,
dadurch gekennzeichnet,
daß man die Oxalsäure bis zu 25% durch Essigsäure ersetzt.

4. Epoxidharz-Diammoniumsalz-Emulsion gemäß den Ansprüchen 1
bis 3,
dadurch gekennzeichnet,
daß man die Oxalsäure bis zu 60% durch eine gegebenenfalls hydroxylgruppenhaltige Dicarbonsäure mit 3 bis 6 C-Atomen oder ein Isomeres der Phthalsäure ersetzt.

5. Verfahren zur Herstellung einer Epoxidharz-Diammoniumsalz-Emulsion gemäß den Ansprüchen 1 bis 4,
dadurch gekennzeichnet,
daß man
a) eine wäßrige Lösung des Diamins vorlegt
b) zu dieser Lösung soviel Oxalsäure hinzufügt, wie zur vollständigen Neutralisation erforderlich ist,
c) den Emulgator zusetzt und
d) das flüssige Epoxidharz unter Rühren zugibt.

6. Verwendung der Epoxidharz-Diammoniumsalz-Emulsion nach den Ansprüchen 1 bis 4 in Epoxidharz-Zementmörteln.

7. Verwendung der Epoxidharz-Diammoniumsalz-Emulsion nach den Ansprüchen 1 bis 4 in Härtungsmischungen, die alkalisch reagierende Stoffe und gegebenenfalls mineralische Füllstoffe enthalten.

8. Verwendung der Epoxidharz-Diammoniumsalz-Emulsion nach den Ansprüchen 1 bis 4 zur Versiegelung von Betonoberflächen.

## Claims

1. An epoxy resin/diammonium salt emulsion based on a liquid epoxy resin, a latent hardener, an emulsifier and water, characterised in that
a) the emulsifier comprises a primary aliphatic alcohol of 8 to 14 carbon atoms and/or an adduct thereof with up to 10 ethylene oxide groups and
b) the latent hardener comprises the reaction product obtained by complete neutralisation with oxalic acid of a diamine of the formula I or II
I $H_2N\ CH_2R\ NH_2$
II $H_2N\ R\ CH_2R\ NH_2$
where R is a substituted alkylene or· cycloalkylene radical of 6 to 9 carbon atoms or an aralkylene radical of 7 to 9 carbon atoms.

2. An epoxy resin/diammonium salt emulsion according to claim 1, characterised in that the emulsifier additionally contains lauric acid.

3. An epoxy resin/diammonium salt emulsion accordto claim 1 or 2, characterised in that up to 25% of the oxalic acid is replaced by acetic acid.

4. An epoxy resin/diammonium salt emulsion according to any of claims I to 3, characterised in that up to 60% of the oxalic acid is replaced by a dicarboxylic acid of 3 to 6 carbon atoms optionally substituted by hydroxyl or by an isomer of phthalic acid.

5. A process for the production of an epoxy resin/ diammonium salt emulsion according to any of claims 1 to 4, characterised in that
a) an aqueous solution of the diamine is provided,
b) as much oxalic acid is added to this solution as is required for complete neutralisation,
c) the emulsifier is introduced, and
d) the liquid epoxy resin is added with stirring.

6. The use of an epoxy resin/diammonium salt emulsion according to any of claims 1 to 4 in epoxy resin cement mortars.

7. The use of an epoxy resin/diammonium salt emulsion according to any of claims 1 to 4 in hardening mixtures containing alkaline-reacting substances and optionally mineral fillers.

8. The use of an epoxy resin/diammonium salt emulsion according to any of claims 1 to 4 for the sealing of cement surfaces.

## Revendications

1. Emultion de résine d'époxyde et de sel de diammonium à base d'une résine d'époxyde liquider, d'un durcisseur latent, d'un émulsifiant et d'eau.
caractérisée par le fait que:
a) l'émulsifiant constitue un alcool aliphatique primaire contenant de 8 à 14 atomes de carbone et/ou son produit d'addition avec jusqu'a 10 groupes oxyde d'éthylene et
b) le durcisseur latent constitue le produit de réaction que l'on obtient par neutralisation complète d'une diamine des formules I ou II
$H_2N - CH_2 - R - NH_2$ (I)
$H_2N - R - CH_2 - R - NH_2$ (II)
par l'alcide oxalique, R étant un radical alkylène ou cycloalkylène substitué contenant de 6 à 9 atome de carbone ou un radical aralkylène contenant de 7 à 9 atomes de carbone.

2. Emulsion de résine d'époxyde et de sel de diammonium selon la revendication 1.
caractérisée par le fait que l'émulsifiant contient en outre de l'acide laurique.

3. Emulsion de résine d'époxyde et de sel de diammonium selon les revendication 1 et 2,
caractérisée par le fait que l'on remplace l'acide oxalique, à concurrence de 25 % au maximum, par de l'acide acétique.

4. Emulsion de résine d'époxyde et de sel de diammonium selon les revendication 1 à 3,
caractérisée par le fait que l'on remplace l'acide oxalique à concurrence de 60 % au maximum par un acide dicarboxylique contenant de 3 à 6 atomes de carbone et renferment éventuellement des groupes hydroxyle, ou un isomère de l'acide phtalique.

5. Emulsion de résine d'époxyde et de sel de diammonium selon les revendications 1 à 4,
caractérisée par le fait
a) que l'on place initialement une solution aqueuse de la diamine,

b) l'on ajoute à cette solution autant d'acide oxalique qu'il est nécessaire pour la neutralisation complète,

    c) que l'on ajoute l'émulsifiant et

    d) que l'on ajoute la résine d'époxyde liquide sous agitation.

    6. L'utilisation de l'émulsion de résine d'époxyde de diammonium selon les revendications 1 à 4 dans des mortiers à la résine d'époxyde et au ciment.

    7. L'utilisation de l'émulsion de résine d'époxyde et de sel de diammonium selon les revendications 1 à 4 dans des mélanges de durcissement qui contiennent des corps à réaction alcaline et éventuellement des charges minérales.

    8. L'utilisation de l'émulsion de résine d'époxyde et de sel de diammonium selon les revendications 1 à 4 pour le cachetage de surfaces de béton.